# EUROPEAN PATENT APPLICATION

(11) **EP 3 817 220 A1**
(43) Date of publication of application: **05.05.2021**
(21) Application number: 19382938.9
(22) Date of filing: 29.10.2019
(51) Int. Cl.: H02S 20/32

(54) **SOLAR TRACKER**

(71) Applicant: Esasolar Energy System, S.L., 28010 Madrid (ES)
(72) Inventor: MALDONADO FERREIRA, José Antonio, 41590 Sevilla (ES)
(74) Representative: Tribalyte Ideas

(57) **Abstract**

Solar tracker (1) for capturing solar radiation comprising a support (1a), a rotation axis (1b) and at least one solar panel (1c). The solar tracker (1) also comprises a tracking system (2) capable of driving the rotation axis (1b) for optimum positioning of the solar panel (1c) and a locking system (3) connected to the rotation axis (1b). The tracking system (2) comprises a control part (2a) and a drive part (2b) connected to a junction box (7) with a microchip programmed to delay the signal sent by the control part (2a) and to send an unlocking order to the locking system (3) before allowing the drive part (2b) to turn the rotation axis (1b). Once the solar panel (1c) has reached the optimum position the locking system (3) locks again.

## Description

### Technical field

The invention refers to photovoltaic plants, more specifically mobile structures and single-axis solar trackers to orient the solar panels of the plants in the optimum direction for capture solar energy.

### State of the art

Over recent decades, the field of renewable energy sources has gained importance for sustainable development. Specifically, photovoltaic solar energy is an efficient and economical alternative for power generation. It is an energy source that produces electricity of renewable origin, obtained directly from solar radiation through a semiconductor device called a photovoltaic cell, which is a mechanism or electrical device that transforms light energy into electricity. These are commonly known as solar panels, which are made up of a series of photovoltaic cells that produce electricity from the light that shines on them.

Understanding how a solar panel works is enough to understand how a single solar cell works. Photovoltaic solar cells are small cells made up of a semiconductor material with an excess of negatively charged electrons, and another positively charged semiconductor with a deficiency of electrons. These cells absorb photons when exposed to sunlight. When the light is absorbed, the electrons begin to move and change holes, producing a direct current that will later be converted into alternating current for distribution.

To optimize the amount of solar energy generated in a photovoltaic system, the aim is to maximise the amount of solar radiation received by the photovoltaic panel. To do this, the photovoltaic panel must remain in a perpendicular position to the solar radiation. To reach that aim, currently it are known, the solar trackers, which are mechanical devices capable of detecting the position of the sun at any time of the day using search algorithms and positioning the photovoltaic panel accordingly.

Solar trackers are devices consisting of mechanical, electrical and electronic systems that follow the track of the sun and capture the maximum solar radiation. These trackers have two component parts, one fixed and the other mobile. The fixed part is the electrical and electronic power supply part of the system, while the mobile part is the mechanical part, which usually consists of a engine that drives a mechanical unit that, in turn, moves the solar panel.

There are different types of trackers available depending on the freedom of movement they provide and/or their tracking algorithm. There are trackers with a single or dual-axis, depending on the rotation they are designed to be capable of. Single-axis trackers follow the path of the sun on an azimuthal or tilt angle, aligned along a true North meridian or with a tilting movement. Tilted trackers, along a polar axis, have a south-oriented rotation axis and a fixed tilt. On the other hand, azimuthal trackers turn on a vertical axis, with the angle of tilt coinciding with latitude. However, the most common type of tracker is that which tracks the sun from east to west throughout the day on a horizontal axis. This is achieved with a South-North orientated axis and varying the tilt throughout the day.

A solar tracker must be in operation in photovoltaic plants for more than 30 years. During that time, it must be able to repeatedly withstand strong winds, rain and snow, and work properly in temperatures of anything between -15 and 50° C. At the same time, it must operate like a freelancer device, with the minimum possible maintenance.

The weather factor with the biggest impact on panel instability is high winds, which are capable of causing the solar panels to vibrate and endanger the balance of the system. The known solution to the problem of vibration is to use shock absorbers or to lock the photovoltaic panel in a horizontal position, that is, parallel to the ground. This lock solution generate an inefficient system since, the panel is not in perpendicular to the sunlight and therefore does not captures all the potential energy.

For all these reasons, the object of the invention is an improved solar tracker which is more efficient and not affected by unstable weather conditions.

### Brief description of the invention

The object of the invention is a single-axis solar tracker that comprises a support with a rotation axis, which is perpendicular to the support, connected to at least one solar panel, and a tracking system capable of driving the rotation axis of the solar panel with respect to the movement of the sun.

The tracking system comprises a control part and a drive part, capable of detecting the position of the solar panel and drive the movement of the rotation axis for its maximum optimization according to the position and radiation of sun. The solar panel movement is done by an engine connected to the control part by a cable. The control part is responsible for sending the movement signals to the drive part, that is to the engine, by using solar position sensors, and a power supply connected to the engine. The drive part, in turn, is the mechanical part of the solar tracker, responsible for executing the movement of the solar tracker.

The solar tracker of the invention is characterised in that it comprises a locking system of the rotation axis of the tracker and a junction box connected to the tracking system. The locking system is connected to the axis and to the control part of the tracking system and the junction box is connected to the control part, to the drive part and to the locking system by cables. So that, the junction box is located between the control part, the locking system and the engine, flowing through it all the signals of the different elements.

For a better understanding of the invention, should be given a description of how the solar tracker works. That is, when the control part detects, by the sensors, that the solar tracker needs to move, it sends a signal to the engine that is intercepted by the junction box, which delays that signal and instructs the locking system to unlock to enable the rotation axis and the solar panel to turn. Once unlocked, the engine receives the instruction to move and turns the rotation axis to the optimum position of the solar tracker with respect to the position of the sun. Once the optimum position has been reached, the locking system locks again.

The fact that the locking system locks after each movement prevents the solar tracker from suffering the effects of instability. The instability effects are caused by inclement weather during the service life of the tracker. Therefore, the locking system prevents effects like vibration or wind effect, etc, regardless of the position of the solar panel, increasing the efficiency of the tracker, as it does not lose its optimum position with respect to the sun. Capturing the maximum solar energy all time.

Furthermore, as the tracker does not suffer so much weather effects it is save on maintenance and it is extend the use life of the solar tracker. In addition by generating more power, it is get better annual production and so considerable savings.

Finally, the invention is a very versatile standard system, since it can be adapted to any tracker already installed and in operation. The only thing that needs to be done is to install a small electrical panel with the junction box from the power supply system and a locking system on the tracker's rotation axis. Thus, it can be described as a valid system for most photovoltaic installations.

### Brief description of drawings

The details of the invention are shown in the following figures, which do not intend to limit the scope of the invention:
- Figure 1 shows an elevation view of a solar tracker.
- Figure 2 shows an elevation view of the tracking system of the solar tracker.
- Figure 3 shows an elevation view of the locking system of the solar tracker.
- Figure 4 shows a perspective view of the mechanical connection of the hydraulic piston with the rotation axis.

### Detailed description of the invention

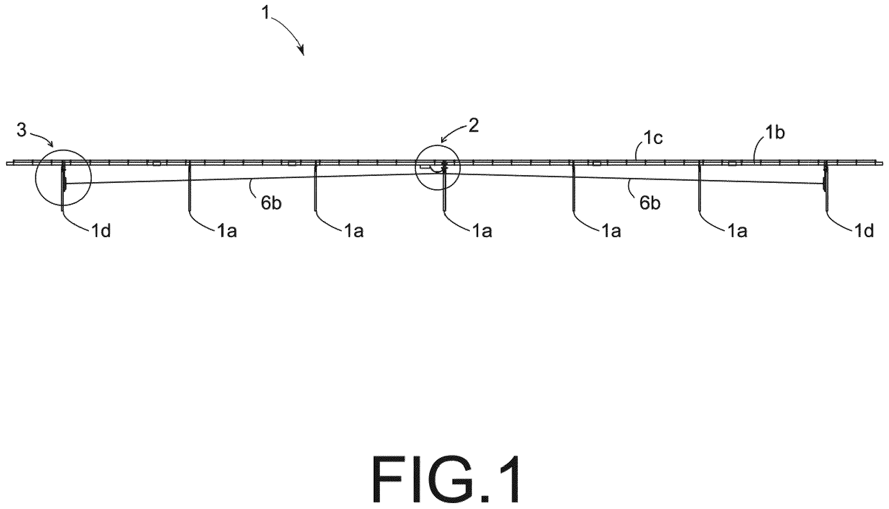

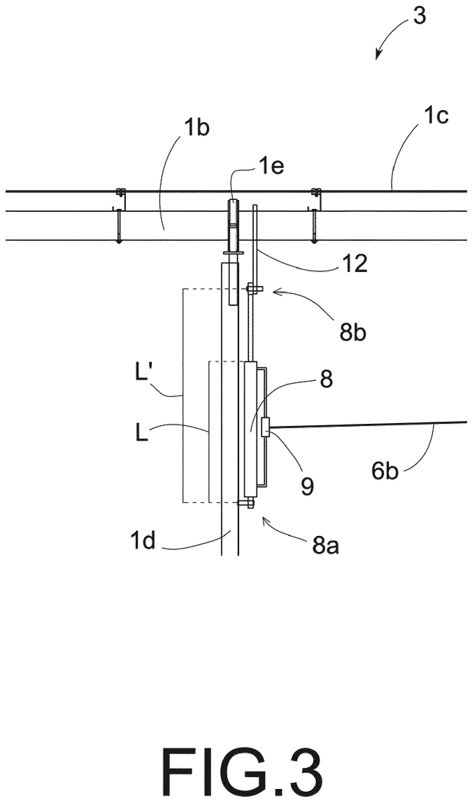

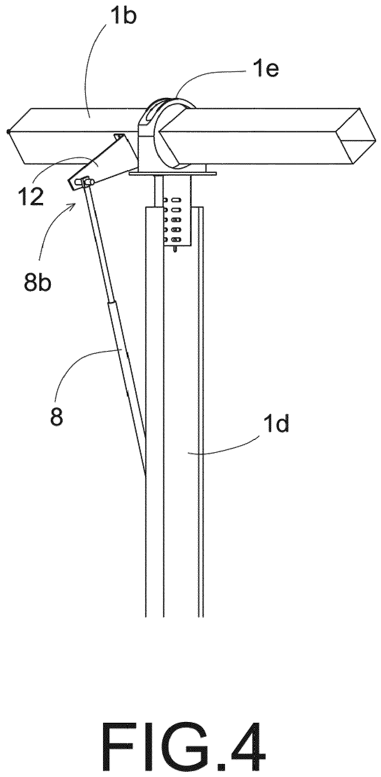

The invention refers to a solar tracker (1), such as that of photovoltaic systems for collecting solar radiation, by moving the solar tracker (1) in line with the position of the sun. As shown in Figure 1, the solar tracker (1) of the invention is a metallic structure comprising at least one fixed support (1a) and a rotation axis (1b) longitudinal and perpendicular to the support (1a), on which solar panels (1c) are mounted. So that, by being united, the rotation axis (1b) and the solar panel (1c), when the rotation axis (1b) turns, the solar panel (1c) turns too. In the embodiment represented in the figures, the connection between the rotation axis (1b) and the support (1a) is made by a swivel joint (1e), as shown in Figures 3 and 4. The solar tracker (1) of the invention also comprises a solar tracking system (2), capable of driving the rotation axis (1b) and the solar panel (1c) to turn them.

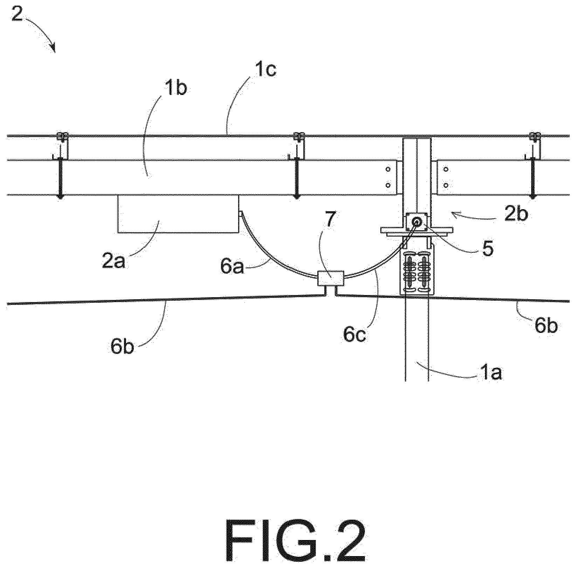

Figure 2 shows, the tracking system (2) of the solar tracker (1) in more detail. The tracking system (2) comprises a control part (2a) and a drive part (2b). The control part (2a) comprises at least one position sensor and a power supply connected to an engine (5) of the drive part (2b) by cables (6a, 6c).The sensors and the power supply are not shown in the figures. The position sensors have the aim of detecting at any given moment, if the solar panel (1c) is in the optimum position with respect to the sun, by using a solar motion algorithm. Thus, when it detects that they are not in the correct position, the control part (2a) sends a signal to the engine (5) to move the rotation axis (1b) and the solar panels (1c) to the correct position.

The correct position of the solar panel (1c), is the position of maximum capture of solar energy, that is, the position in which the surface of the solar panel (1c) is perpendicular to the sun's rays.

The solar tracker (1) of the invention is characterised by comprising a locking system (3) connected to the rotation axis (1b), such that the solar tracker (1) is locked when the solar panels (1c) are in optimum position with respect to the sun and the rotation axis (1b) is at rest.

The fact that the solar tracker (1) is locked after each movement with the solar panel (1c) in its optimum position ensures that the solar tracker (1) does not suffer the effects of instability due to adverse weather conditions, or vibrations caused by the wind. This feature also increases the efficiency of the solar tracker (1), as it harnesses the maximum amount of solar energy at all times.

The solar tracker (1) is also characterised in that it comprises a junction box (7) which comprises a programmed microchip with a timing sequencer, which ensure that the signal that is sent by the control part (2a) to the engine (5) is delayed along the next position check of the position sensors Thus, the junction box (7) sends a signal to unlock to the locking system (3) so that the rotation axis (1b) can turn when the signal from the control part (2a) to the engine (5) is executed.

For all the above to work, the junction box (7) must be connected to the tracking system (2), to the engine (5) and to the locking system (3) by cables (6a, 6b and 6c). In the embodiment of the Figures, the junction box (7) is connected to the control part (2a) by cable (6a), to the drive part (2b) containing the engine (5) by cable (6c), and to the locking system (3) by cable (6b). Thus, the signals from the control part (2a) pass through the junction box (7) prior to reaching the target element, causing a delay in the initial signal.

Additionally, in the embodiment of Figures 1 and 3, the locking system (3) is attached to at least one end support (1d) of the solar tracker (1). Moreover, the locking system (3) is also connected to the rotation axis (1b), since is responsible for locking or allowing the rotation of the rotation axis (1b), and also of the solar panel (1c). At the same time, the locking system (3) is connected to the junction box (7) by a cable (6b), wherein the junction box (7) is responsible for transmitting the lock or unlock signal to the locking system (3) of the rotation axis (1b).

Figure 3 shows an embodiment of the locking system (3), wherein it is observe that the locking system (3) comprises a hydraulic piston (8) with an electrovalve (9), wherein the hydraulic piston (8) comprises two piston ends (8a, 8b). The hydraulic piston (8) is coupled to the support (1d) on one end (8a) of the hydraulic piston (8) and is coupled to the rotation axis (1b) on the other end (8b) of the hydraulic piston (8). Specifically, the connection between the end (8b) of the hydraulic piston ant the rotation axis (1b) is made by a mechanical flange-type device, that join the end (8b) of the hydraulic piston (8) with the protruding rod (12) fixed on the rotation axis (1b), as shown in the embodiment of Figures 3 and 4.

Additionally, in the Figure 3 also it is observe that the electrovalve (9) keeps the hydraulic piston (8), and thus the rotation axis (1b) locked, when the solar panel (1c) is in an optimum position with respect to the sun. The hydraulic piston (8) comprises a variable length (L), which is capable of extending and retracting when the rotation axis (1b) turns. However, after each movement of the rotation axis (1b), the hydraulic piston (8) is once again locked by the electrovalve (9) with a new fixed length (L'). So, after each movement, the solar tracker (1) is locked, that is, protected from the adverse weather conditions.

Additionally, the electrovalve (9) is connected to the hydraulic piston (8), so when the valve (9) receives the signal from the junction box (7), it opens or closes, enabling the oil to circulate through the hydraulic piston (8) and allowing it to extend or retract, varying its length (L) and enabling the rotation axis (1b) to turn freely.

Preferably, the operation of the solar tracker (1) begins with the reading of the position sensors of the tracking system (2), which perform a position check from time to time, that is, the sensors are programmed to conduct the checks at certain desired time intervals by the operator. With each position check, if the sensors do not detect movement of the sun in relation to the position of the solar panel (1c), that is, the solar panels (1c) are in the optimum position, the solar tracker (1) will remain at rest and the hydraulic piston (8) locked. Conversely, if they detect that the sun has moved, the position sensors send a signal to the control part (2a) to start moving the rotation axis (1b). So the power supply sends a motion signal to the engine (5), however, this signal is intercepted by the junction box (7), wherein it delays that motion signal to the engine (5) by the microchip and causes the opening of the electrovalve (9), enabling the unlocking of the hydraulic piston (8). Once the hydraulic piston (8) is unlocked, the motion signal delay ends and the junction box (7) sends a signal to the engine (5) to turn the rotation axis (1b). The rotation axis (1b) is able to turn because the hydraulic piston (8) is unlocked and can extend or retract its length (L). The rotation axis (1b) continues to turn until the solar panel (1c) is in the optimum position.

Finally, the tracking system (2) uses the position sensors to identify that the solar panel (1c) is in the optimum position, and then, the control part (2a) cuts off the power supply to the junction box (7) and the locking system (3) is activated, that is, the electrovalve (9) is closed, locking the position of the hydraulic piston (8). This leaves the hydraulic piston (8) locked at a fixed length (L'), preventing any movement of the rotation axis (1b) and, therefore, of the solar tracker (1).

## Claims

1. A solar tracker (1) comprising a support (1a) attached to a rotation axis (1b) perpendicular to the support (1a), wherein at least one solar panel (1c) is mounted, a tracking system (2) capable of driving the rotation axis (1b) of the solar panel (1c), wherein the tracking system (2) comprises a control part (2a) and a drive part (2b), where the control part (2a) comprises at least one position sensor, a power supply connected to an engine (5) of the drive part (2b), wherein the solar tracker (1) is **characterised in that** it comprises:
- At least one locking system (3) connected to the rotation axis (1b),
- A junction box (7) connected to the tracking system (2), to the engine (5) and to the locking system (3).

2. A solar tracker (1), according to claim 1, wherein the rotation axis (1b) is connected to the support (1a) by a swivel joint (1e).

3. A solar tracker (1), according to claim 1, wherein the junction box (7) comprises a microchip programmed with a timing sequencer.

4. A solar tracker (1), according to claim 1, wherein the locking system (3) comprises a hydraulic piston (8) with an electrovalve (9), wherein the electrovalve (9) keeps the hydraulic piston (8) locked or unlocked.

5. A solar tracker (1), according to claim 4, wherein the hydraulic piston (8) comprises a variable length (L) between its respective ends (8a, 8b).

6. A solar tracker (1), according to claim 4, wherein the locking system (3) is attached to an end supports (1d) of the solar tracker (1) by the end (8a) of the hydraulic piston (8) and to the rotation axis (1b) by a protruding rod (12) by the other end (8b) of the hydraulic piston (8).

7. A solar tracker (1), according to claim 4, wherein the locking system (3) is unlocked by the junction box (7) by opening the electrovalve (9), when the control part (2a) of the tracking system (2) sends a signal to the engine (5) to do the correct positioning of the solar panels (1c) by turning the rotation axis (1b).

8. A solar tracker, according to claim 4, wherein the hydraulic piston (8) comprises a length (L') when the locking system (3) is unlocked and the piston end (8b) moves away from the other piston end (8a) when the rotation axis (1b) turns.

9. A solar tracker, according to claim 4, wherein the locking system (3) is locked by the signal from the junction box (7) by closing the electrovalve (9), when the solar panel (1c) is in the optimum position and the engine (5) has stopped.
